# EUROPÄISCHE PATENTSCHRIFT

(11) **EP 1 554 170 B1**
(45) Veröffentlichungstag und Bekanntmachung des Hinweises auf die Patenterteilung: **07.03.2007**
(21) Anmeldenummer: 03753384.1
(22) Anmeldetag: 05.09.2003
(51) Int. Cl.: B62D 25/08, B62D 25/16

(54) **SEITENWANDMODUL EINES KRAFTFAHRZEUGES**
SIDEWALL MODULE OF A MOTOR VEHICLE
MODULE DE PAROI LATERALE POUR AUTOMOBILE

(30) Priorität: 22.10.2002 DE 10249115
(43) Veröffentlichungstag der Anmeldung: 20.07.2005
(73) Patentinhaber: Bayerische Motoren Werke Aktiengesellschaft, 80809 München (DE)
(72) Erfinder: HAFNER, Udo, 80993 München (DE); HACHMANN, Dirk, 80993 München (DE); ADLER, Stefan, 80809 München (DE); EBERLE, Niklas, 80339 München (DE); LEITNER, Mario, 85256 Vierkirchen (DE)
(86) Internationale Anmeldenummer: PCT/EP2003/009844
(87) Internationale Veröffentlichungsnummer: WO 2004/037629

(56) Entgegenhaltungen:
- DE-A- 1 480 483
- DE-A- 1 580 075
- DE-A- 10 102 187
- FR-A- 2 758 121
- FR-A- 2 835 494

## Beschreibung

Die Erfindung betrifft ein Seitenwandmodul eines Kraftfahrzeuges.

Aus der FR 2 758 121 A ist ein Verstärkungselement bekannt, der zur Unterstützung der Seitenwand dient. Das Verstärkungselement kann sich entlang eines Großteils des Kotflügels oder entlang des gesamten Kotflügels erstrecken und ermöglicht es, diesen zu versteifen. Eine Innenschicht kann als innerer Träger dienen, die die Befestigung des Kotflügels an der übrigen Karosserie ermöglicht.
Damit dient das Verstärkungselement nicht zur Befestigung der Seitenwand an der Karosserie. Die Innenschicht, die dagegen zur Befestigung der Seitenwand dient, liegt als Innenschicht flächig an der Seitenwand an und dient der Versteifung.

Aus der DE 1 480 483 A ist ein Kotflügel bekannt, welche in Verbindung mit einem Seitenteil und einem Radhaus selbsttragend ist und an einer Spritzwand befestigt ist, bzw. an einem Windlauf; Das Seitenteil dient somit als Verstärkungselement und nicht nur zur Befestigung.

Aus der EP 1 334 880 A1 ist ein Befestigungsträger zur Unterstützung eines Kotflügels bekannt; Der Kotflügel wird gespannt zwischen dem Befestigungsträger und dem Radhaus und bekommt so eine gewissene Steifheit, unabhängig von seiner Montage an das Fahrgestell. Die Montage eines Wischwaschbehälters kann vor einer Montage des Kotflügels erfolgen.

Aus der DE 101 02 187 A1 ist ein die Aufprallenergie aufnehmendes Stützelement entlang des Kotflügels bekannt.

Aus der EP 0 839 704 B1 ist ein Stützträger für Karosserieelemente bekannt, der zur Befestigung an dem Chassis eines Kraftfahrzeugs bestimmt ist. Der Stützträger weist auf der Seite des Karosserieelements eine Verstärkung auf, deren Außenkontur geeignet ist, sich im wesentlichen an die innere Form des Karosserieelements anzupassen, um sie zu stützen.

Ferner ist aus der DE 30 02 280 C2 eine Kraftfahrzeugkarosserie mit einer aus Kunststoff bestehenden Seitenwand bekannt. Die Seitenwand ist an einem über dem Rad liegenden Trägersystem angeschraubt. Nachteiligerweise wird dabei der Freiraum zwischen Seitenwand und Radhaus sehr wenig oder gar nicht als Bauraum genutzt.

Aufgabe der Erfindung ist es, eine Seitenwand bzw. ein Seitenwandmodul zu schaffen, dass es ermöglicht, den Bauraum zwischen Seitenwand und Radhaus effektiv zu nutzen.

Diese Aufgabe wird durch die Merkmale des Patentanspruchs 1 gelöst.

Erfindungsgemäß besteht ein Seitenwandmodul eines Kraftfahrzeuges zumindest aus einem Befestigungsträger, mit dem das Seitenwandmodul am Kraftfahrzeug befestigbar ist, und einer damit verbundenen Seitenwand. Die Seitenwand ist selbsttragend, und der Befestigungsträger dient nur zur Befestigung und nicht zur flächigen Unterstützung der Seitenwand. Das Seitenwandmodul kann vormontiert am Kraftfahrzeug befestigt werden. Die hier gemeinte Seitenwand wird im allgemeinen Sprachgebrauch auch häufig als Kotflügel bezeichnet.

An dem Seitenwandmodul können Bauteilumfänge, die bisher Online bei der eigentlichen Kraftfahrzeugmontage am Fahrzeug angebracht werden, im Zuge der Vormontage am Befestigungsträger befestigt werden. So kann beispielsweise an dem Befestigungsträger zusätzlich eine Radhausverkleidung angebracht werden. Auch andere Bauteile wie Scheinwerfer, Blinkleuchten, Wischwaschbehälter, Kühlmittelausgleichsbehälter, etc. können bei der Vormontage am Befestigungsträger angebracht werden.

So kann bisher nicht genutzter oder am Fahrzeug nur schwer zugänglicher Bauraum mit weiteren Bauteilen ausgefüllt werden. Da die Seitenwand selbsttragend ist, wird der Bauraum nicht wie beim aus der EP 0 839 704 B1 bekannten Stützträger vergeudet, um die Seitenwand über ihre gesamte Kontur zu stützen. Zugleich kann der Montageumfang bei der eigentlichen Kraftfahrzeugmontage reduziert werden. Es muss nur mehr das komplettierte Seitenwandmodul am Kraftfahrzeug befestigt und alle benötigten Medienanschlüsse hergestellt werden. Durch die effektivere Ausnutzung des zur Verfügung stehenden Bauraums besteht die Möglichkeit, das Motorraumpackage in der Höhe zu reduzieren und in der Fahrzeugbreite auszudehnen.

Bevorzugt ist die Seitenwand nur mit ihrem oberen, an eine Frontklappe angrenzenden Bereich mit dem oberen Bereich des Befestigungsträgers verbunden. Dadurch kann der Befestigungsträger entsprechend schmal und klein gehalten werden, sodass er nur wenig Bauraum benötigt. Der Befestigungsträger liegt günstigerweise mit seinem unteren Bereich zumindest teilweise auf einem Teil der Fahrzeugkarosserie auf. Dieser Teil der Fahrzeugkarosserie kann beispielsweise ein Längsträger im Motorraum sein. Somit ist eine genaue Positionierung der Seitenwand relativ zur Fahrzeugkarosserie und somit zu anderen mit der Fahrzeugkarosserie verbundenen Bauteilen möglich. Idealerweise weist der Befestigungsträger eine längliche Form auf, die sich analog zur Seitenwand vor allem in Fahrzeuglängsrichtung erstreckt. Der Befestigungsträger erstreckt sich dabei bevorzugt über große Teile der Längserstreckung der Seitenwand. Somit ist eine optimale Befestigung der selbsttragenden Seitenwand sichergestellt.

Vorteilhafterweise besteht der Befestigungsträger zumindest teilweise aus Kunststoff, wie beispielsweise einem faserverstärkten Polyamid oder Polypropylen. Dadurch ist der Befestigungsträger relativ frei gestaltbar und weist ein im Vergleich zu anderen Werkstoffen geringes Gewicht auf. Zudem ist Kunststoff sehr korrosionsbeständig. Denkbar ist auch eine Hybridbauweise, bei der der Befestigungsträger teilweise aus Kunststoff und teilweise aus metallischen Werkstoffen besteht. Auch kann der Befestigungsträger ein- oder mehrteilig ausgeführt sein. Dadurch kann die Steifigkeit des Befestigungsträgers in unterschiedlichen Richtungen den Anforderungen gerecht ausgelegt werden, da zusätzliche Rippen und Versteifungen problemlos darstellbar sind.

Günstigerweise ist die Steifigkeit und / oder die Form des Befestigungsträgers so abstimmbar, dass eine gezielte Nachgiebigkeit bei einem Fußgängeraufprall realisierbar ist. Dazu kann der Befestigungsträger beispielsweise zumindest einen oberen und einen unteren Längsträger aufweisen, die mit S-förmigen Stegen miteinander verbunden sind. Bei einem Aufprall eines Fußgängers auf die Seitenwand werden die Aufprallkräfte in den oberen Längsträger eingeleitet, da die Seitenwand mit dem oberen Längsträger verbunden ist. Der untere Längsträger liegt auf einem Bauteil der Fahrzeugkarosserie auf. Durch die Aufprallkräfte wird nun der obere Längsträger zum unteren Längsträger heruntergedrückt. Dabei werden die S-förmigen Stege plastisch verformt, bis der obere Längsträger auf Block auf dem unteren Längsträger bzw. auf den vollständig zusammengefalteten Stegen aufliegt. Durch die plastische Verformung wird die Aufprallenergie zumindest teilweise absorbiert. Die plastische Verformung wird dabei auch von den Materialeigenschaften, wie der Steifigkeit, des Befestigungsträger maßgeblich beeinflusst.

Vorteilhafterweise ist die Seitenwand aus Kunststoff. Dies ermöglicht eine größere Designfreiheit gegenüber Blechbauteilen, da auch Hinterschnitte darstellbar sind, und Streckgrenzen kein Hindernis bei der Formgebung darstellen.

Vorteilhafterweise weist das Seitenwandmodul zusätzlich zumindest eine Versteifungsrippe auf. Die Versteifungsrippe erhöht die Steifigkeit des Seitenwandmoduls. Sie kann als separates Bauteil oder einteilig mit dem Befestigungsträger und / oder mit der Seitenwand ausgeführt sein.

Neben dem erfindungsgemäßen Seitenwandmodul sind bereits allgemein Frontendmodule bekannt, die zumindest einen Stoßfänger mit Verkleidung und gegebenenfalls mit Blinkleuchten, etc. umfassen. Ein solches Frontendmodul ist beispielsweise in der DE 198 56 350 A1 beschrieben. In einer günstigen Ausgestaltung der Erfindung sind ein linkes und ein rechtes Seitenwandmodul vorne mit einem Frontendmodul miteinander verbunden und bilden zusammen ein Vormontageeinheit.

Zur Befestigung eines solchen Seitenwandmoduls oder Vormontageeinheit kann auch die Vorderwagenstruktur des Kraftfahrzeugs anders gestaltet werden, als es für eine herkömmliche Montage aller Einzelteile erforderlich ist. So kann idealerweise die Befestigung des Seitenwandmoduls bzw. der Vormontageeinheit an einem Träger erfolgen, der sich von einer A-Säule zu einer Federstütze erstreckt, und dann in einem spitzen Winkel in einen Motorträger einmündet. Der Träger verläuft vorteilhafterweise im Bereich zwischen Federstütze und Einmündung in den Motorträger praktisch oberhalb des Motorträgers ohne seitlichen Versatz. Zur Aufnahme des Seitenwandmoduls oder der Vormontageeinheit sind keine zusätzlichen Stützträger mehr erforderlich, die zum Beispiel oberhalb eines Rades angeordnet sind und frei nach vorne auskragen. Die Befestigung des Seitenwandmoduls bzw. der Vormontageeinheit am Kraftfahrzeug kann ausschließlich an dem Träger, an der A-Säule und / oder am Motorträger erfolgen.

In der Zeichnung ist ein Ausführungsbeispiel der Erfindung dargestellt, anhand dessen die Erfindung im folgenden näher beschrieben wird. Die Figuren zeigen in schematischer Darstellungsweise:
- **Fig.** 1: eine perspektivische Explosionsdarstellung eines Seitenwandmoduls,
- **Fig.** 2: eine perspektivische Ansicht des Seitenwandmoduls von **Fig.** 1,
- **Fig.** 3: eine weitere perspektivische Ansicht des Seitenwandmoduls von **Fig.** 1,
- **Fig.** 4: eine perspektivische Ansicht einer Vormontageeinheit,
- **Fig.** 5: eine Seitenansicht einer Vorderwagenstruktur,
- **Fig.** 6: eine perspektivische Ansicht der Vorderwagenstruktur von **Fig.** 5,
- **Fig.** 7: eine Draufsicht auf die Vorderwagenstruktur von **Fig.** 5,
- **Fig. 8**: eine perspektivische Darstellung möglicher Fugenverläufe zwischen einem Seitenwandmodul und einer angrenzenden Motorhaube und
- **Fig.** 9: eine Draufsicht auf die möglichen Fugenverläufe aus **Fig.** 8.

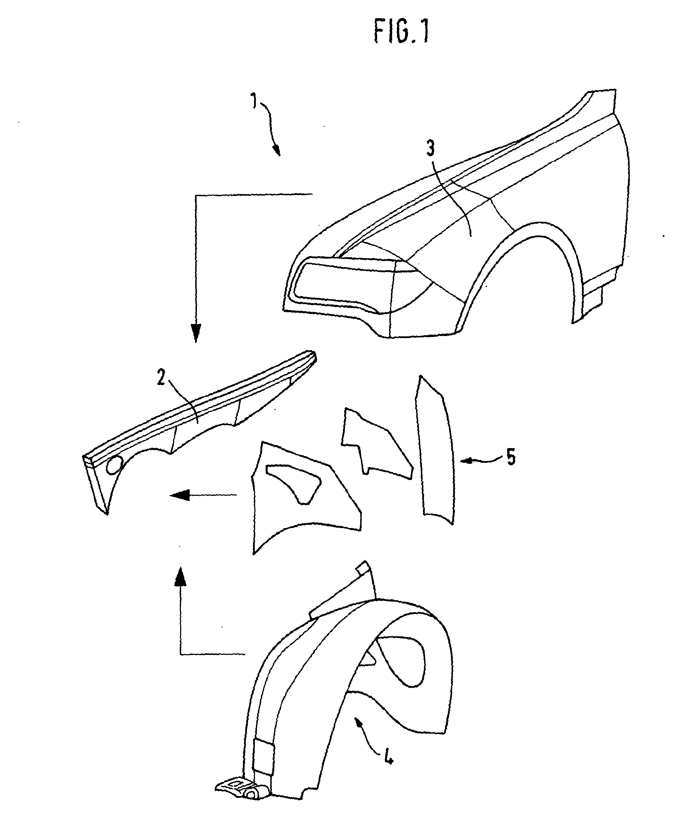

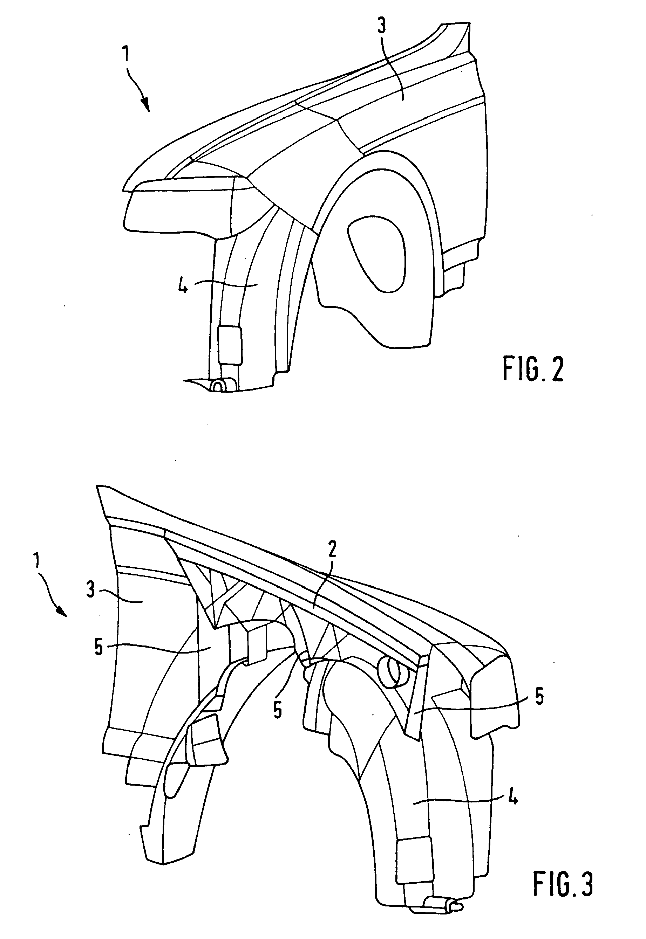

In **Fig.** 1, **Fig.** 2 und **Fig.** 3 ist ein Seitenwandmodul 1 gezeigt. Das Seitenwandmodul 1 besteht aus einem Befestigungsträger 2 aus Kunststoff, einer selbsttragenden Seitenwand 3 aus Kunststoff, einer Radhausverkleidung 4 und mehreren zusätzlichen Versteifungsrippen 5. Der Befestigungsträger 2 ist mit Verrippungen versehen und hat eine längliche Form, die sich in Fahrzeuglängsrichtung und annährend über die gesamte Länge des Seitenwandmoduls 1 erstreckt. Der Befestigungsträger 2 ist nur mit seiner Oberseite mit dem oberen Bereich der Seitenwand 3 verbunden, der an eine Frontklappe angrenzt. Die Versteifungsrippen 5 verlaufen in einem Abstand von ca. 5mm zur Seitenwand 3 und sind untereinander mit einer Lasche verbunden, die die Versteifungsrippen 5 zueinander fixiert. Die Versteifungsrippen 5 werden aus Kostengründen an den Grundkörper des Befestigungsträgers 2 angeclipst oder angeschraubt. Dies vereinfacht das Werkzeug zur Herstellung des Befestigungsträgers 2. Durch die Versteifungsrippen 5 erfolgt eine Abstützung der Seitenwand 3 bei seitlichen Belastungen, wie zum Beispiel beim Anlehnen einer Person oder bei einem leichten seitlichen Aufprall.

Das Seitenwandmodul 1 wird vollständig vormontiert, bevor es am eigentlichen Fahrzeug montiert wird. Dadurch erhöht sich die Ausnutzung des zur Verfügung stehenden Bauraums, da beispielsweise am Seitenwandmodul 1 der Baumraum zwischen Seitenwand 3 und Radhausverkleidung 4 noch gut zugänglich ist, während derselbe Baumraum nach der Montage am eigentlichen Fahrzeug praktisch nicht mehr sinnvoll zugänglich ist.

Bei erforderlichen Reparaturen kann entweder nur die Radhausverkleidung 4 demontiert werden, oder die Radhausverkleidung 4 und die Seitenwand 3 oder aber das ganze Seitenwandmodul 1.

Die Steifigkeit und die Form des Befestigungsträgers 2 kann bewusst so gehalten sein, dass die Seitenwand 3 definiert nachgeben kann, wenn ein Fußgänger oder Radfahrer mit dem Kopf auf der Seitenwand 3 aufprallt. Die geringe Steifigkeit des Befestigungsträgers 2 kann beispielsweise durch Aussparungen, durch den Entfall von Verrippungen oder durch lokal geringere Materialstärken sichergestellt werden. Ferner ist es am Seitenwandmodul 1 gut möglich, die Nachgiebigkeit für einen Kopfaufprall und die Nachgiebigkeit für einen Aufprall mit dem oberen Bein im Bereich eines Frontscheinwerfers aufeinander abzustimmen.

Durch die Verwendung von Kunststoff als Material sowohl für den Befestigungsträger 2 als auch für die Seitenwand 3 reduziert sich das Fahrzeuggewicht gegenüber einem konventionellen Fahrzeug mit einer Seitenwand aus Blech. Somit trägt das Seitenwandmodul 1 zu mehr Fahrdynamik und einem geringeren Kraftstoffverbrauch bei.

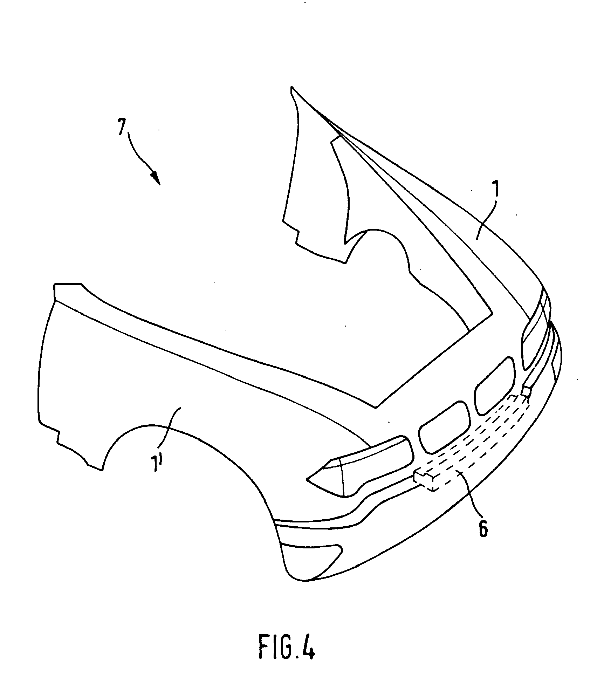

In **Fig.** 4 sind zwei Seitenwandmodule 1 und 1' mit einem Frontendmodul 6 zu einer großen Vormontageeinheit 7 miteinander verbunden. Dadurch erhöhen sich noch die Vormontageumfänge, während die Montageumfänge am eigentlichen Fahrzeug sich verringern. Auch müssen die Seitenwandmodule 1 und 1' nicht mehr zum Frontendmodul 6 am Fahrzeug zueinander passend ausgerichtet werden.

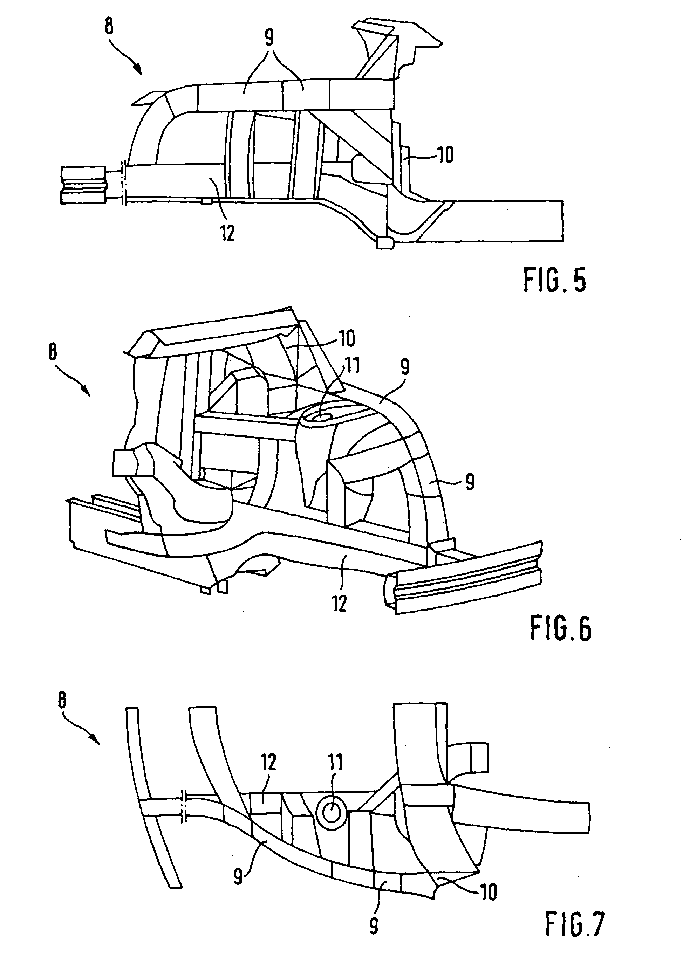

Die Befestigung des Seitenwandmoduls 1 bzw. der Vormontageeinheit 7 erfolgt an einer in **Fig.** 5, **Fig.** 6 und **Fig.** 7 dargestellten Vorderwagenstruktur 8 des Kraftfahrzeuges. Die Vorderwagenstruktur 8 weist einen Träger 9 auf, der von einer A-Säule 10 über eine Federbeinaufnahme 11 verläuft und schließlich in einen Motorträger 12 in einem spitzen Winkel einmündet. Im Gegensatz zu konventionellen Vorderwagenstrukturen 8 verläuft der Träger 9 dabei im Bereich zwischen der Einmündung in den Motorträger 12 und der Federbeinaufnahme 11 ohne seitlichen Versatz oberhalb des Motorträgers 12. Die Vorderwagenstruktur 8 weist keinen Stützträger auf, der über dem Rad liegend von der Federbeinaufnahme 11 aus frei nach vorne ragt. Das Seitenwandmodul 1 bzw. die Vormontageeinheit 7 ist ausschließlich an dem Träger 9 befestigt. Dazu liegen die Befestigungsträger 2 jeweils mit ihrer Unterseite auf dem Träger 9 auf und sind an diesem befestigt.

Durch den Entfall von über dem Rad liegenden und frei nach vorne auskragenden Stützträgern gibt es keine steife Unterstruktur knapp unter der Seitenwand und / oder einer Frontklappe mehr. Durch den Freiraum ist auch ein passiver Fußgängeraufprallschutz möglich, bei dem die Seitenwand 3 und / oder die Frontklappe bei einem Aufprall eines Fußgängers oder Radfahrers entsprechend nachgeben können.

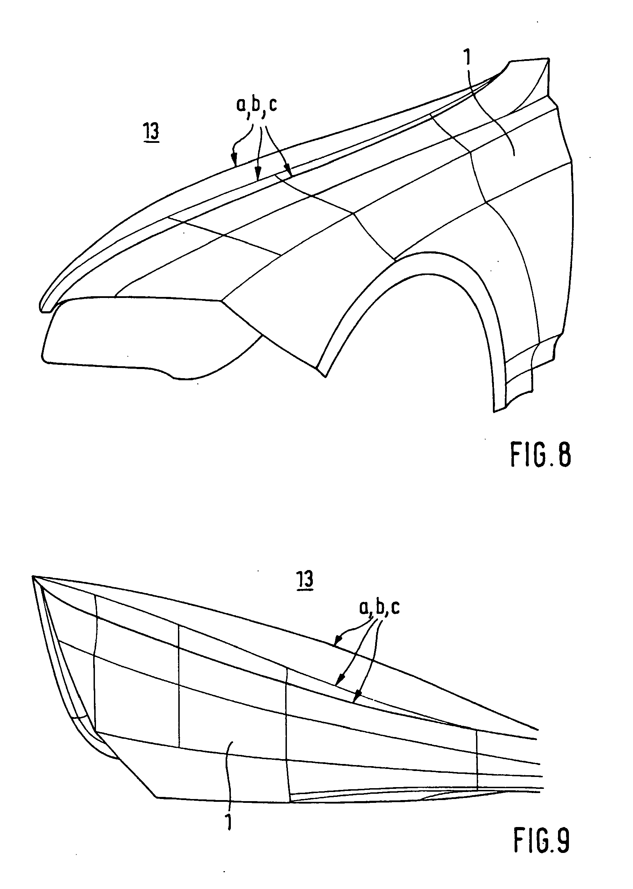

Die Vorderwagenstruktur 8 mit dem großen Freiraum ermöglicht zudem eine leichte Differenzierung von Fahrzeugen. So können auf dieselbe Vorderwagenstruktur 8 - wie in **Fig.** 8 und **Fig.** 9 gezeigt - unterschiedliche Seitenwandmodule 1 und unterschiedliche Frontklappen 13 montiert werden. Die unterschiedlichen Seitenwandmodule 1 und Frontklappen 13 können unterschiedliche Fugenverläufe a, b, c aufweisen. Auch kann der Vorderwagen durch entsprechende Anpassungen der Seitenwandmodule 1 und der Frontklappen 13 unterschiedliche Abmaße in der Höhe und in der Breite haben, ohne dass die Vorderwagenstruktur 8 verändert werden muss.

Diese leichte Veränderbarkeit des optischen Erscheinungsbildes eines Fahrzeuges ist insbesondere bei Modellüberarbeitungen, für Differenzierungen innerhalb einer Produktfamilie sowie bei Designänderungen während des Serienentwicklungsprozesses von Vorteil.

## Patentansprüche

1. Seitenwandmodul (1) eines Kraftfahrzeuges, das zumindest aus einem Befestigungsträger (2), mit dem das Seitenwandmodul (1) am Kraftfahrzeug befestigbar ist, und einer damit verbundenen Seitenwand (3) besteht, **dadurch gekennzeichnet, dass** die Seitenwand (3) selbsttragend ist, und der Befestigungsträger (2) nur zur Befestigung und nicht zur flächigen Unterstützung der Seitenwand (3) dient.

2. Seitenwandmodul (1) nach Anspruch 1, **dadurch gekennzeichnet, dass** die Seitenwand (3) nur mit ihrem oberen, an eine Frontklappe angrenzenden Bereich mit dem oberen Bereich des Befestigungsträgers (2) verbunden ist.

3. Seitenwandmodul (1) nach Anspruch 1 oder 2, **dadurch gekennzeichnet, dass** der Befestigungsträger (2) mit seinem unteren Bereich zumindest teilweise auf einem Teil der Fahrzeugkarosserie aufliegt.

4. Seitenwandmodul (1) nach einem der vorhergehenden Ansprüche, **dadurch gekennzeichnet, dass** der Befestigungsträger (2) zumindest teilweise aus Kunststoff besteht.

5. Seitenwandmodul (1) nach einem der vorhergehenden Ansprüche, **dadurch gekennzeichnet, dass** der Befestigungsträger (2) eine längliche Form aufweist, die sich vor allem in Fahrzeuglängsrichtung erstreckt.

6. Seitenwandmodul (1) nach Anspruch 5, **dadurch gekennzeichnet, dass** der Befestigungsträger (2) sich über große Teile der Längserstreckung des Seitenwandmoduls (1) erstreckt.

7. Seitenwandmodul (1) nach einem der vorhergehenden Ansprüche, **dadurch gekennzeichnet, dass** die Steifigkeit und / oder die Form des Befestigungsträgers (2) so abstimmbar ist, dass eine gezielte Nachgiebigkeit bei einem Fußgängeraufprall realisierbar ist.

8. Seitenwandmodul (1) nach Anspruch 7, **dadurch gekennzeichnet, dass** der Befestigungsträger (2) zumindest einen oberen und einen unteren Längsträger aufweist, die mit S-förmigen Stegen miteinander verbunden sind.

9. Seitenwandmodul (1) nach einem der vorhergehenden Ansprüche, **dadurch gekennzeichnet, dass** der Befestigungsträger (2) Befestigungsmöglichkeiten für zumindest ein weiteres Bauteil aufweist.

10. Seitenwandmodul (1) nach Anspruch 9, **dadurch gekennzeichnet, dass** an dem Befestigungsträger (2) zusätzlich eine Radhausverkleidung (4) befestigt ist.

11. Seitenwandmodul (1) nach Anspruch 9 oder 10, **dadurch gekennzeichnet, dass** das zumindest eine weitere Bauteil ein Scheinwerfer, eine Blinkleuchte, ein Wischwaschbehälter und / oder ein Kühlmittelausgleichsbehälter ist.

12. Seitenwandmodul (1) nach einem der vorhergehenden Ansprüche, **dadurch gekennzeichnet, dass** der Befestigungsträger (2) ein- oder mehrteilig ausgeführt sein kann.

13. Seitenwandmodul (1) nach einem der vorhergehenden Ansprüche, **dadurch gekennzeichnet, dass** die Seitenwand (3) aus Kunststoff ist.

14. Seitenwandmodul (1) nach einem der vorhergehenden Ansprüche, **dadurch gekennzeichnet, dass** es zusätzlich zumindest eine Versteifungsrippe (5) aufweist.

15. Vormontageeinheit (7), bestehend aus einem linken und einem rechten Seitenwandmodul (1, 1') nach einem der vorhergehenden Ansprüche, die mit einem Frontendmodul (6) - in Fahrtrichtung gesehen - vorne miteinander verbunden sind.

16. Vorderwagenstruktur eines Kraftfahrzeugs zur Aufnahme zumindest eines Seitenwandmoduls (1) nach einem der Ansprüche 1 bis 14 oder einer Vormontageeinheit nach Anspruch 15, **dadurch gekennzeichnet, dass** die Befestigung des Seitenwandmoduls (1) bzw. der Vormontageeinheit (7) an einem Träger (9) erfolgt, der sich von einer A-Säule (10) zu einer Federstütze (11) erstreckt, und dann in einem Winkel kleiner gleich 90° in einen Motorträger (12) einmündet.

17. Vorderwagenstruktur nach Anspruch 16, **dadurch gekennzeichnet, dass** der Träger (9) im Bereich zwischen Federstütze (11) und Einmündung in den Motorträger (12) oberhalb des Motorträgers (12) ohne nennenswerten seitlichen Versatz zum Motorträger (12) verläuft.

18. Vorderwagenstruktur nach Anspruch 16 oder 17, **dadurch gekennzeichnet, dass** die Vorderwagenstruktur (8) keinen zusätzlichen Stützträger zur Aufnahme des Seitenwandmoduls (1) oder der Vormontageeinheit (7) aufweist.

19. Vorderwagenstruktur nach einem der Ansprüche 16 bis 18, **dadurch gekennzeichnet, dass** die Befestigung des Seitenwandmoduls (1) bzw. der Vormontageeinheit (7) am Kraftfahrzeug ausschließlich an dem Träger (9), an der A-Säule (10) und / oder am Motorträger (12) erfolgt.

## Claims

1. A side panel module (1) for a motor vehicle comprising at least one fastening bearer (2) for fastening the side panel module (1) to the vehicle, and a side panel (3) connected thereto, **characterised in that** the side panel (3) is self-supporting and the fastening bearer (2) is used only for fastening, not for supporting the side panel (3) over its surface.

2. A side panel module (1) according to claim 1, **characterised in that** only the top region of the side panel (3) adjoining the bonnet is connected to the top region of the fastening bearer (2).

3. A side panel module (1) according to claim 1 or claim 2, **characterised in that** the bottom region of the fastening bearer (2) rests at least partly on a part of the vehicle body.

4. A side panel module (1) according to any of the preceding claims, **characterised in that** the fastening bearer (2) is made at least partly of plastics material.

5. A side panel module (1) according to any of the preceding claims, **characterised in that** the fastening bearer (2) has an elongate shape extending mainly in the longitudinal direction of the vehicle.

6. A side panel module (1) according to claim 5, **characterised in that** the fastening bearer (2) extends over large parts of the longitudinal extension of the side panel module (1).

7. A side panel module (1) according to any of the preceding claims, **characterised in that** the stiffness and/or shape of the fastening bearer (2) is adaptable so as to obtain controlled give or flexibility on impact with a pedestrian.

8. A side panel module (1) according to claim 7, **characterised in that** the fastening bearer (2) comprises at least one top and one bottom longitudinal bearer connected to one another by S-shaped webs.

9. A side panel module (1) according to any of the preceding claims, **characterised in that** the fastening bearer (2) has fastening means for at least one additional component.

10. A side panel module (1) according to claim 9, **characterised in that** a wheel housing covering (4) is additionally fastened to the fastening bearer.

11. A side panel module (1) according to claim 9 or claim 10, **characterised in that** the at least one additional component is a headlamp, an indicator light, a window-washing liquid container and/or a coolant compensating container.

12. A side panel module (1) according to any of the preceding claims, **characterised in that** the fastening bearer (2) is in one or more parts.

13. A side panel module (1) according to any of the preceding claims, **characterised in that** the side panel (3) is of plastics material.

14. A side panel module (1) according to any of the preceding claims, **characterised in that** it additionally comprises at least one stiffening rib (5).

15. A pre-assembly unit (7) comprising a left and a right side panel module (1, 1') according to any of the preceding claims, connected to one another in front, considered in the direction of travel, by a front end module (6).

16. A car front structure of a motor vehicle for holding at least one side panel module (1) according to any of claims 1 to 14 or a pre-assembly unit according to claim 15, **characterised in that** the side panel module (1) or the pre-assembly unit (7) is fastened to a bearer (9) which extends from an A-column (10) to a spring support (11) and terminates in an engine bearer (12) at an angle less than 90°.

17. A car front structure according to claim 16, **characterised in that** the bearer (9), in the region between the spring support (11) and the termination in the engine bearer (12), extends above the engine bearer (12) without appreciable lateral offset therefrom.

18. A car front structure according to claim 16 or claim 17, **characterised in that** the car front structure (8) does not have any additional supporting bearer for receiving the side panel module (1) or the pre-assembly unit (7).

19. A car front structure according to any of claims 16 to 18, **characterised in that** the side panel module (1) or the pre-assembly unit (7) is fastened to the vehicle exclusively at the bearer (9), the A-column (10) and/or the engine bearing (12).

## Revendications

1. Module de paroi latérale (1) d'une automobile, constitué au moins d'un support de fixation (2), par lequel il peut être fixé à l'automobile, et d'une paroi latérale (3) reliée à ce support,
**caractérisé en ce que**
la paroi latérale (3) est autoportante et le support de fixation (2) sert uniquement à la fixation et non au soutien de la paroi latérale (3) sur toute la surface.

2. Module de paroi latérale (1) selon la revendication 1,
**caractérisé en ce que**
la paroi latérale (3) n'est reliée que par sa zone supérieure, adjacente au capot-moteur, à la zone supérieure du support de fixation (2).

3. Module de paroi latérale (1) selon la revendication 1 ou 2,
**caractérisé en ce que**
le support de fixation (2) repose au moins en partie par sa zone inférieure sur une partie de la carrosserie du véhicule.

4. Module de paroi latérale (1) selon l'une des revendications précédentes,
**caractérisé en ce que**
le support de fixation (2) est constitué au moins en partie de matière plastique.

5. Module de paroi latérale (1) selon l'une des revendications précédentes,
**caractérisé en ce que**
le support de fixation (2) présente une forme allongée qui s'étend principalement dans la direction longitudinale de l'automobile.

6. Module de paroi latérale (1) selon la revendication 5,
**caractérisé en ce que**
le support de fixation (2) s'étend sur de grandes parties de la longueur du module de paroi latérale (1).

7. Module de paroi latérale (1) selon l'une des revendications précédentes,
**caractérisé en ce que**
la rigidité et/ou la forme du support de fixation (2) peuvent être harmonisées de façon à réaliser une flexibilité appropriée en cas de choc avec un piéton.

8. Module de paroi latérale (1) selon la revendication 7,
**caractérisé en ce que**
le support de fixation (2) présente au moins un longeron supérieur et un longeron inférieur reliés l'un à l'autre par des tiges en forme de S.

9. Module de paroi latérale (1) selon l'une des revendications précédentes,
**caractérisé en ce que**
le support de fixation (2) présente des possibilités de fixation pour au moins un autre composant.

10. Module de paroi latérale (1) selon la revendication 9,
**caractérisé en ce qu'**
un revêtement de logement de roue (4) est également fixé au support de fixation (2).

11. Module de paroi latérale (1) selon la revendication 9 ou 10,
**caractérisé en ce que**
l'au moins un autre composant est un phare, un clignotant, un réservoir de lave-glace et/ou un réservoir d'équilibrage de réfrigérant.

12. Module de paroi latérale (1) selon l'une des revendications précédentes,
**caractérisé par**
le support de fixation (2) en une ou plusieurs pièces.

13. Module de paroi latérale (1) selon l'une des revendications précédentes,
**caractérisé par**
la paroi latérale (3) en matière plastique.

14. Module de paroi latérale (1) selon l'une des revendications précédentes,
**caractérisé en ce qu'**
il présente en plus au moins une nervure de renforcement (5).

15. Unité de prémontage (7), constituée d'un module de paroi latérale (1, 1') gauche et droit, selon l'une des revendications précédentes, relié à un module d'extrémité avant (6) - vu dans la direction de marche - .

16. Structure avant d'un véhicule pour recevoir au moins un module de paroi latérale (1) selon l'une des revendications 1 à 14 ou une unité de prémontage selon la revendication 15,
**caractérisée en ce que**
la fixation du module de paroi latérale (1) ou de l'unité de prémontage (7) est effectuée sur un support (9) qui s'étend depuis un montant A (10) jusqu'à une chandelle de suspension (11) et débouche alors sous un angle inférieur ou égal à 90° dans un support du moteur (12).

17. Structure avant d'un véhicule selon la revendication 16,
**caractérisée en ce que**
le support (9) s'étend entre la chandelle de suspension (11) et l'embouchure dans le support du moteur (12) au-dessus du support moteur (12) sans décalage latérale notable par rapport à celui-ci.

18. Structure avant d'un véhicule selon la revendication 16 ou 17,
**caractérisée en ce que**
la structure avant du véhicule (8) ne comporte pas de support d'appui supplémentaire pour la réception du module de paroi latérale (1) ou de l'unité de prémontage (7).

19. Structure avant d'un véhicule selon :l'une des revendications 16 à 18,
**caractérisée en ce que**
la fixation du module de paroi latérale (1) ou de l'unité de prémontage (7) sur le véhicule est effectuée exclusivement sur le support (9), sur le montant A (10) et/ ou sur le support du moteur (12).
